# EUROPÄISCHE PATENTSCHRIFT

(11) **EP 2 322 880 B1**
(45) Veröffentlichungstag und Bekanntmachung des Hinweises auf die Patenterteilung: **09.03.2016**
(21) Anmeldenummer: 10014352.8
(22) Anmeldetag: 06.11.2010
(51) Int. Cl.: F25B 30/02, F25B 27/00, F24D 11/02, F24D 3/18, F25B 25/00

(54) **Wärmepumpenanlage**
Heat pumps system
Système de pompes à chaleur

(30) Priorität: 16.11.2009 AT 18092009
(43) Veröffentlichungstag der Anmeldung: 18.05.2011
(73) Patentinhaber: Vaillant GmbH, 42859 Remscheid (DE)
(72) Erfinder: Brecker, Heinz-Jörg, 42857 Remscheid (DE); Lang, Rainer Dr., 51519 Odenthal-Eikamp (DE)
(74) Vertreter: Hocker, Thomas

(56) Entgegenhaltungen:
- CH-A- 236 721
- DE-A1- 3 101 138
- DE-U1- 29 913 264
- DE-U1-202009 007 774
- JP-A- 2004 340 533

## Beschreibung

Die Erfindung bezieht sich auf eine Wärmepumpenanlage.

Gemäß dem Stand der Technik wird in der Wärmepumpentechnik ein Kältemittelkreislauf einer Wärmepumpe über einen Umweltwärmequellen-Kreislauf mit einer oder mehreren Umweltwärmequellen verbunden.

Wird eine Wärmepumpe in Verbindung mit mehreren Wohneinheiten betrieben, so befindet sich der Kältemittelkreislauf der Wärmepumpe in der Regel im Keller; die Wohneinheiten werden dann über die Vor- und Rücklaufleitung eines Heizungskreislaufs sowie die Brauchwasserleitung mit Wärme versorgt. Auf dem Weg von der Wärmepumpe zum Verbraucher (Heizkörper und / oder Brauchwasserzapfstelle) entstehen somit Wärmeverluste.

DE 20 2009 007 774 U1 zeigt eine Wärmepumpe, die gleichzeitig mit mehreren Wärmequellen verbunden werden kann. Je nach Temperatur der Quellen kann somit optimiert Wärme genutzt werden.

CH 236 721 zeigt eine Wärmepumpenanlage mit mehreren Wärmepumpenkreisläufen, bei denen die Verdampfer und Kondensatoren jeweils in Reihen geschaltet sind. Der strömungstechnisch zuerst durchströmte Verdampfer auf der Wärmequellenseite ist über seinen Wärmepumpenkreislauf mit dem zuletzt durchströmten Kondensator auf der Seite des aufzuheizenden Mediums verbunden. Der strömungstechnisch zuletzt durchströmte Verdampfer auf der Wärmequellenseite ist über seinen Wärmepumpenkreislauf mit dem zuerst durchströmten Kondensator auf der Seite des aufzuheizenden Mediums verbunden. Hierdurch ist es möglich, mittels einer Wärmepumpenanlage eine größere Temperaturdifferenz beim zu beheizenden Medium zu erzielen, als bei einer einstufigen Wärmepumpe. Nachteilig ist jedoch, dass hierdurch auch auf der Seite der Wärmequelle eine entsprechende Temperaturdifferenz notwendig ist, so dass die minimale Eingangstemperatur der Wärmequelle zwangsläufig relativ hoch ist.

JP 2006292313 zeigt eine Wärmepumpenanlage gemäß Oberbegriff des Anspruchs 1 mit mehreren baulich voneinander getrennten Wärmepumpen, die zur Klimatisierung dienen. Wärme aus Räumen kann über diese jeweils diesen Räumen zugeordnete Wärmepumpen auf einen gemeinsamen Umweltwärmesenkenkreislauf und gemeinsame Wärmesenken übertragen werden.

Ziel der Erfindung ist es, mehrere Wohneinheiten mit möglichst geringen Wärmeverlusten mittels einer Wärmepumpe zu beheizen.

Erfindungsgemäß wird dies gemäß den Merkmalen des unabhängigen Anspruchs 1 dadurch gelöst, dass bei einer Wärmepumpenanlage mit genau einem Umweltwärmequellen-Kreislauf, in den mindestens eine Umweltwärmequelle als Wärmequelle integriert ist, Verdampfer mindestens zweier Kältemittelkreisläufe baulich voneinander getrennter Wärmepumpen parallel mit dem einen Umweltwärmequellen-Kreislauf verbunden sind. Dies bietet den Vorteil, dass der Umweltwärmequellen-Kreislauf nahezu verlustfrei in die einzelnen Wohneinheiten geführt werden kann und dort erst vor Ort an der Stelle des Wärmebedarfs die Umweltwärme auf ein höheres Niveau gehoben wird. Eine Dämmung des Umweltwärmequellen-Kreislauf ist - im Gegensatz zu einem Heizkreislauf - auf dem Weg zu den einzelnen Wohneinheiten nicht notwendig. Verluste durch Wärmetransport an Stellen, an denen kein Wärmebedarf vorliegt, da beispielsweise die Bewohner unterschiedliche Heizgewohnheiten haben, werden hierdurch vermieden.

Vorteilhafte Ausgestaltungen der Erfindung ergeben sich durch die Merkmale der Ansprüche 2 bis 6. So kann es sich bei den Umweltwärmequellen um Luft-Sole-Wärmetauscher, Erdsonden, ein Solarabsorber, Abluft-Wärmetauscher und / oder Regenwasser-Zisternen mit Wärmetauschern handeln. Da mehrere Umweltwärmequellen vorhanden sind so können diese mittels Umschalt- oder Abschaltventilen deaktiviert werden. Ferner kann ein Niedertemperatur-Wärmespeicher zur Aufnahme von Umweltwärme mit dem Umweltwärmequellen-Kreislauf verbunden werden. Zur Deckung eines erhöhten Wärmebedarfs können einzelne Wärmepumpen durch ein parallel oder seriell geschaltetes Zusatzheizgerät unterstützt werden. Heizgerät und Wärmepumpe können dabei miteinander baulich vereint werden.

Anspruch 7 schützt ein Gebäude mit einer entsprechenden Wärmepumpenanlage.

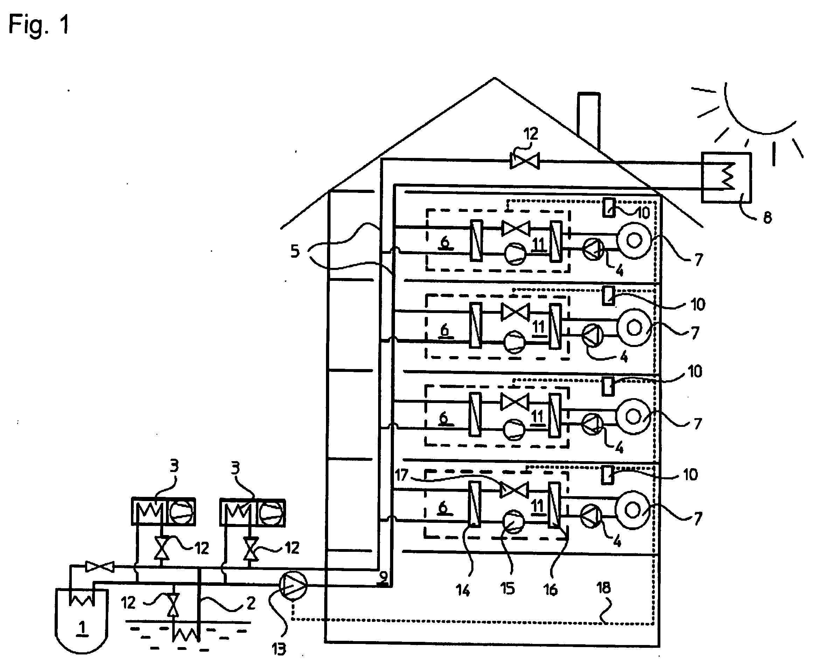

Figur 1 zeigt ein Gebäude mit einer Wärmepumpenanlage mit genau einem Umweltwärmequellen-Kreislauf 9, der über eine Vor- und Rücklaufleitung 5 mit den Verdampfern 14 von vier Wärmepumpen 6 verbunden ist und in dem Sole zirkuliert. Der Umweltwärmequellen-Kreislauf 9, in dem sich eine Umwälzpumpe 13 befindet, ist ferner mit zwei Luft-Sole-Wärmetauschern 3, einer Erdsonde 2, einem Solarabsorber 8 und einer Regenwasser-Zisterne mit Wärmetauscher 1 verbunden, wobei jede dieser Umweltwärmequellen mittels eines Abschaltventils 12 deaktivierbar ist. Alternativ könnte die Funktion der Abschaltventile 12 auch von Umschaltventilen, welche den Solekreis entweder durch die entsprechende Umweltwärmequelle oder an ihr vorbei leiten, übernommen werden. Auch weitere Wärmequellen wie zum Beispiel ein Abluft-Wärmetauscher sind erfindungsgemäß einsetzbar.

Die vier Wärmepumpen 6 verfügen über jeweils einen Kältemittelkreislauf 11 mit einem Verdampfer 14, einem Kompressor 15, einem Kondensator 16 sowie einem Expansionsventil 17. Der Kondensator 16 ist mit einem Heizkreislauf 7 über eine Heizungspumpe 4 verbunden. Eine optionale Brauchwasserbereitung ist erfindungsgemäß möglich, in den Figuren jedoch nicht explizit dargestellt.

Mit den einzelnen Wärmepumpen 6 sind Regelungen 10 verbunden; diese Regelungen 10 sind wiederum miteinander und mit den Abschaltventilen 12 sowie der Umwälzpumpe 13 des Umweltwärmequellen-Kreislaufs 9 über Datenleitungen 18 verbunden. In der Figur sind nicht alle Datenverbindungen dargestellt.

Liegt in mindestens einer Wohneinheit mit separater Wärmepumpe 6 eine Wärmeanforderung vor, so setzt die dazugehörige Regelung 10 die Umwälzpumpe 13 des Umweltwärmequellen-Kreislaufs 9 in Gang. Zumindest ein Abschaltventil 12 einer Umweltwärmequelle wird geöffnet, so dass Umweltwärme in den Umweltwärmequellen-Kreislauf 9 aufgenommen wird. Die erwärmte Sole des Umweltwärmequellen-Kreislaufs 9 strömt zu den parallel angeordneten Verdampfern 14 der Wärmepumpen 6. Bei den Wärmepumpen 6, bei denen eine Wärmeanforderung anliegt, wird Umweltwärme im Verdampfer 14 auf den dazugehörigen Kältekreislauf 11 übertragen. Das so erwärmte Fluid des Kältemittelskreislaufs 11 wird in dem dazugehörigen Kompressor 15 komprimiert, dabei abermals erhitzt und zum dazugehörigen Kondensator 16 geleitet, wo Wärme an den korrespondierenden Heizkreislauf 7 übertragen wird. Das abgekühlte Kältemittel wird im Expansionsventil 17 entspannt und dabei abgekühlt, so dass es im Verdampfer 14 wieder Wärme aufnehmen kann.

Bei den Wohneinheiten mit separater Wärmepumpe 6, in denen keine Wärmeanforderung vorliegt, durchströmt die Sole den entsprechenden Verdampfern 14 ohne dabei Wärme abzugeben.

Die Umweltwärmequellen können alternativ oder gemeinsam, seriell oder parallel betrieben werden. Hierbei muss bei sehr unterschiedlichen Temperaturen der Umweltwärmequellen darauf geachtet werden, dass nicht Wärme von einer Umweltwärmequelle über eine andere Umweltwärmequelle wieder abgeführt wird.

Während gemäß dem Stand der Technik üblicherweise mit Gas, Öl oder Strom die Grundlast gedeckt wird und nur falls gewünscht oder verfügbar regenerativ unterstützt wird, wird gemäß der vorliegenden Erfindung vorzugsweise die Grundlast regenerativ gedeckt und nur falls erforderlich mit Gas, Öl oder Strom zugeheizt.

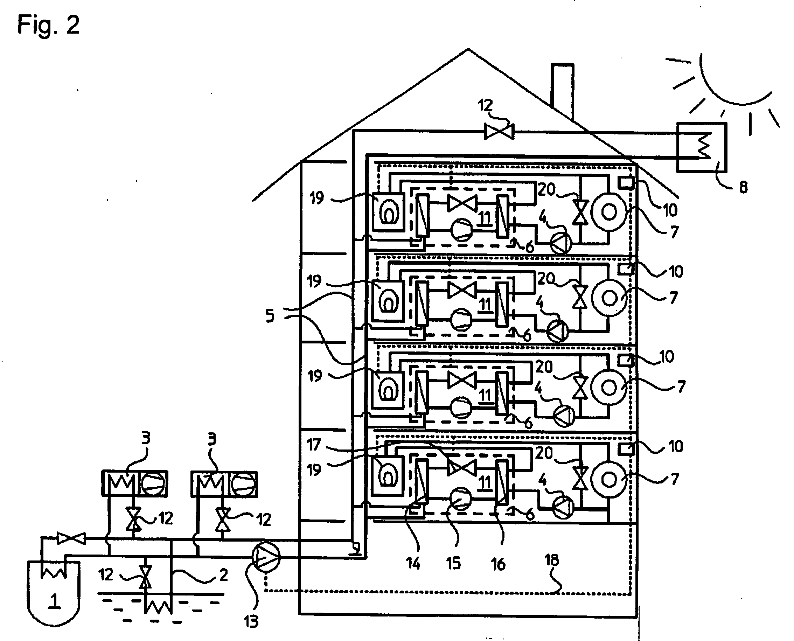

Figur 2 unterscheidet sich von Figur 1 dadurch, dass die Wärmpumpen 6 von Zusatzheizgeräten 19 unterstützt werden; bei diesen kann es sich beispielsweise um konventionelle Erdgas-Brennwertgeräte handeln. Die Wärmepumpen 6 können hierbei das Heizungswasser vorwärmen, das dann in den seriell geschalteten Zusatzheizgeräten 19 weiter erwärmt wird. Ferner befindet sich parallel zum Heizkreislauf 7 ein Überströmventil 20. Alternativ könnten die Zusatzheizgeräte auch zu den Wärmepumpen 6 parallel geschaltet werden.

Je nach erforderlicher Heizleistung kann die Wärmepumpe 6 monovalent (das heißt ohne zusätzlichen Wärmeerzeuger) oder bivalent (das heißt mit Zusatzheizgerät 19) betrieben werden. Bei monovalentem Betrieb wird die Wohneinheit nur von der Wärmepumpe 6 mit Heizwärme und warmem Wasser versorgt. Ist die geforderte Heizleistung höher als die Heizleistung der Wärmepumpe 6, so wird die Wärmepumpe bivalent betrieben. Hier unterscheidet man bivalent-alternativen und bivalent-parallelen Betrieb.

Bei bivalent-alternativem Betrieb deckt die Wärmepumpe 6 die Wärmeanforderungen der Wohnung bis zu einer definierten Außentemperatur alleine ab. Unterhalb dieser Außentemperatur deckt das Zusatzheizgerät 19 die Wärmeanforderungen alleine ab.

Bei bivalent-parallelem Betrieb deckt die Wärmepumpe 6 die geforderte Heizleistung bis zu einer definierten Außentemperatur alleine ab. Unterhalb dieser Außentemperatur wird das Zusatzheizgerät 19 dazu geschaltet, beide Wärmeerzeuger versorgen die Wohneinheit parallel mit Heizwärme. Es gilt, je niedriger die Außentemperatur, desto höher der Anteil des Zusatzheizgeräts 19 an der gesamten Heizwärme. Bei der Verwendung eines Luft-Sole-Wärmetauschers 3 versorgt ab einer definierten minimalen Außentemperatur das Zusatzheizgerät 19 die Wohneinheit alleine mit Heizwärme, da wirtschaftlich keine Wärme von der Außenluft aufgenommen werden kann.

Da die Temperatur des Umweltwärmequellen-Kreislaufs 9, der die Umweltwärme aufnimmt, im Falle der Verwendung eines Luft-Sole-Wärmetauschers 3 immer 1 oder 2 Kelvin unterhalb der Außenluft-Temperatur liegt, sollten die Sole führende Vor- und Rücklaufleitung 5 bei der Verlegung im Haus dampfdicht mit geschlossenzelligem Dämmmaterial mit hohem Wasserdampf-Diffusionswiderstand (z.B. Handelsname Armaflex) isoliert werden, damit an den kalten Leitungen keine Luftfeuchtigkeit kondensiert. Eine Wärmedämmung der Leitungen des Umweltwärmequellen-Kreislaufs 9 ist hingegen nicht notwendig, da der Umweltwärmequellen-Kreislauf 9 im Haus keine Wärme abgibt, sondern vielmehr aufgrund des vorherrschenden Temperaturniveaus des Mauerwerks und der Räume Wärme aufnimmt und die aufgenommene Wärme der Vorlaufleitung in den Wärmepumpen 6 genutzt werden kann. Die Rücklaufleitung des Umweltwärmequellen-Kreislaufs 9 nimmt ebenfalls Wärme aus dem Mauerwerk und den Räumen auf. Diese aufgenommene Wärme reduziert die zur Verfügung stehende Temperaturdifferenz am Umweltwärmetauscher und sollte daher reduziert werden.

Auch bei der Nutzung der anderen Umweltwärmequellen ist die Temperatur des Umweltwärmequellen-Kreislaufs 9 derart niedrig, dass außerhalb des Hauses eine Dämmung nicht notwendig ist und im Haus ebenfalls keine zwingende Notwendigkeit gegeben ist, solange die Kondensation von Luftfeuchtigkeit an den Leitungen vermieden wird. Bei der Verlegung im Mauerwerk ist davon auszugehen, dass keine Kondensation an den Leitungen stattfindet.

Optional kann ein Niedertemperatur-Wärmespeicher zur Speicherung von Umweltwärme in den Umweltwärmequellen-Kreislauf 9 eingebunden werden. Ist ein Niedertemperatur-Wärmespeicher in die Anlage integriert, so kann in dem Fall, in dem keine Wärme benötigt wird, jedoch Umweltwärme (z.B. Sonnenstrahlung) vorliegt, diese Wärme zwischengespeichert werden.

Die Wärmepumpe 6 kann in einem wandhängenden Gehäuse integriert sein, um möglichst wenig Platz in den Wohneinheiten zu beanspruchen. Hierbei kann die Wärmepumpe 6 vor oder hinter einem Wandheizgerät, mit dem es eine zusammengesetzte Einheit bildet, installiert werden. Das Gerät, das an der Wand direkt befestigt ist, verfügt dann über Anschlüsse für das andere Gerät. In der Regel wird die Wärmepumpe 6 gleichzeitig als Anschlusskonsole für das Zusatzheizgerät 19 ausgeführt, damit ein handelsübliches Heizgerät auf der Wärmepumpe 6 befestigt werden kann.

## Patentansprüche

1. Wärmepumpenanlage mit genau einem Umweltwärmequellen-Kreislauf (9) mit einer Sole, in den mehrere Umweltwärmequellen (1, 2, 3, 8) als Wärmequelle integriert sind,
**dadurch gekennzeichnet, dass** parallel angeordnete Verdampfer (14) mindestens zweier Kältemittelkreisläufe (11) baulich voneinander getrennter Wärmepumpen (6) mit dem einen Umweltwärmequellen-Kreislauf (9) verbunden sind, dass einzelne Umweltwärmequellen (1, 2, 3, 8) mittels Umschalt- oder Abschaltventile (12) deaktivierbar sind, dass bei Wärmepumpen (6), in denen keine Wärmeanforderung vorliegt, die Sole den entsprechenden Verdampfer (14) ohne dabei Wärme abzugeben durchströmt, und dass sich im Umweitwärmequellen-Kreislauf (9) genau eine Umwälzpumpe (13) befindet.

2. Wärmepumpenanlage nach Anspruch 1, **dadurch gekennzeichnet, dass** als Umweltwärmequelle mindestens ein Luft-Sole-Wärmetauscher (3), eine Erdsonde (2), ein Solarabsorber (8), ein Abluft-Wärmetauscher und / oder eine Regenwasser-Zisterne mit Wärmetauscher (1) zum Einsatz kommen.

3. Wärmepumpenanlage nach einem der Ansprüche 1 oder 2, **dadurch gekennzeichnet, dass** ein Niedertemperatur-Wärmespeicher mit dem Umweltwärmequellen-Kreislauf (9) verbunden ist.

4. Wärmepumpenanlage nach einem der Ansprüche 1 bis 3, **dadurch gekennzeichnet, dass** zu mindestens einer Wärmepumpe (6) ein Zusatzheizgerät (19) parallel oder seriell zur Erwärmung eines Heizkreislaufs (7) und / oder von Brauchwasser zuschaltbar angeordnet ist.

5. Wärmepumpenanlage nach Anspruch 4, **dadurch gekennzeichnet, dass** die Wärmepumpe (6) und das Zusatzheizgerät (19) miteinander verbunden werden, wobei das eine Gerät Anschlüsse für die Befestigung und die elektrische, hydraulische und gasförmige Versorgung des anderen Geräts enthält.

6. Wärmepumpenanlage nach einem der vorhergehenden Ansprüche, **dadurch gekennzeichnet, dass** mit den einzelnen Wärmepumpen (6) Regelungen (10) verbunden sind, wobei diese Regelungen (10) wiederum mit der Umwälzpumpe sowie mit den Umschalt- oder Abschaltventile (12) (13) des Umweltwärmequellen-Kreislaufs (9) über Datenleitungen (18) verbunden sind.

7. Gebäude mit mehreren voneinander getrennten Wohneinheiten und einer Wärmepumpenanlage nach einem der Ansprüche 1 bis 6, **dadurch gekennzeichnet, dass** die voneinander getrennten Wärmepumpen (6) in unterschiedlichen Wohneinheiten installiert sind und über den gemeinsamen Solekreislauf (9) mit mehreren verschiedenen Umweltwärmequellen (1, 2, 3, 8) verbunden sind.

## Claims

1. Heat pump system with exactly one environmental heat source circuit (9) having a brine in which several environmental heat sources (1, 2, 3, 8) are integrated as heat sources,
**characterised in that**, evaporators (14) of at least two coolant circuits (11) of heat pumps (6) which are structurally separated from each other, said evaporators being arranged in parallel, are connected to the one environmental heat source circuit (9), that individual environmental heat sources (1, 2, 3, 8) are able to be deactivated by means of reversing or shut-off valves (12), that in the case of heat pumps (6) in which no heat requirement is present, the brine flows through the corresponding evaporator (14) without thereby emitting heat, and that exactly one circulation pump (13) is located in the environmental heat source circuit (9).

2. Heat pump system according to claim 1, **characterised in that** at least one air-to-brine heat exchanger (3), geothermal probe (2), solar absorber (8), exhaust air heat exchanger and/or rainwater cistern with heat exchanger (1) is used as an environmental heat source.

3. Heat pump system according to one of claims 1 or 2, **characterised in that** a low temperature heat store is connected to the environmental heat source circuit (9).

4. Heat pump system according to one of claims 1 to 3, **characterised in that** an additional heating device (19) is arranged in parallel or in series to at least one heat pump (6) to heat a heating circuit (7) and/or is arranged to be connectible to service water.

5. Heat pump system according to claim 4, **characterised in that** the heat pump (6) and the additional heating device (19) are connected to each other, wherein the one device contains connections for the fastening and the electrical, hydraulic and gaseous supply of the other device.

6. Heat pump system according to one of the preceding claims, **characterised in that** regulators (10) are connected to the individual heat pumps (6), wherein these regulators (10) in turn are connected to the circulation pump (13) as well as to the reversing or shut-off valves (12) of the environmental heat source circuit (9) via data lines (18).

7. Buildings having several residential units which are separated from one another and a heat pump system according to one of claims 1 to 6, **characterised in that** the heat pumps (6) which are separated from one another are installed in different residential units and are connected to several different environmental heat sources (1, 2, 3, 8) via the mutual brine circuit (9).

## Revendications

1. Installation de pompe à chaleur avec un seul circuit de source de chaleur extérieure (9) avec une source d'eau salée, dans laquelle plusieurs sources de chaleur extérieures (1, 2, 3, 8) sont intégrées comme source de chaleur, **caractérisée en ce que** les évaporateurs (14) disposés en parallèle d'au moins deux pompes à chaleur (6) séparées l'une de l'autre des circuits de refroidissement (11) dans la construction sont reliés au circuit de source de chaleur extérieure, **en ce que** chaque source de chaleur extérieure (1, 2, 3, 8) peut être désactivée au moyen d'une soupape d'inversion ou d'arrêt (12), **en ce que**, pour les pompes à chaleur (6) dans lesquelles il n'y a aucune demande de chaleur, la source d'eau salée traverse l'évaporateur correspondant (14) sans dégager en même temps de chaleur, et **en ce qu'**une pompe de recirculation (13) est située dans le circuit de source de chaleur extérieure (9).

2. Installation de pompe à chaleur selon la revendication 1, **caractérisée en ce que** au moins un échangeur de chaleur air-eau salée (3), une sonde géothermique (2), un absorbeur solaire (8), un échangeur air vicié-chaleur et/ou un réservoir d'eau de pluie avec un échangeur de chaleur (1) sont utilisés comme source de chaleur.

3. Installation de pompe à chaleur selon l'une quelconque des revendications 1 ou 2, **caractérisée en ce qu'**un accumulateur thermique basse température est relié au circuit de source de chaleur extérieure (9).

4. Installation de pompe à chaleur selon l'une quelconque des revendications 1 à 3, **caractérisée en ce qu'**un appareil de chauffage auxiliaire (19) est monté en parallèle ou en série de façon à être raccordé pour chauffer un circuit de chauffage (7) et/ou de l'eau non potable pour au moins une pompe à chaleur (6).

5. Installation de pompe à chaleur selon la revendication 4, **caractérisée en ce que** la pompe à chaleur (6) et l'appareil de chauffage auxiliaire (19) sont reliés l'un à l'autre, un appareil contenant les raccords permettant la fixation et l'alimentation électrique, hydraulique et gazeuse de l'autre appareil.

6. Installation de pompe à chaleur selon l'une quelconque des revendications précédentes, **caractérisée en ce que** des commandes (10) sont reliées à chaque pompe à chaleur (6), ces commandes (10) étant à leur tour reliées à la pompe de recirculation (13) ainsi qu'aux soupapes d'inversion ou d'arrêt (12) du circuit de source de chaleur extérieure (9) par le biais d'une ligne de transmission de données (18).

7. Bâtiment avec plusieurs unités d'habitation séparées et une installation de pompe à chaleur selon l'une quelconque des revendications 1 à 6, **caractérisé en ce que** les pompes à chaleur séparées les unes des autres (6) sont installées dans différentes unités d'habitation et sont reliées à plusieurs sources de chaleur extérieures (1, 2, 3, 8) différentes par le biais du même circuit d'eau salée (9).
